# EUROPÄISCHE PATENTSCHRIFT

(11) **EP 0 506 614 B1**
(45) Veröffentlichungstag und Bekanntmachung des Hinweises auf die Patenterteilung: **28.04.1999**
(21) Anmeldenummer: 92810198.9
(22) Anmeldetag: 19.03.1992
(51) Int. Cl.: C08K 5/00, C08L 23/02

(54) **Verfahren zum Stabilisieren von recyclierten Kunststoffgemischen**
Process for stabilising recycled plastic mixtures
Procédé pour stabiliser des mélanges de matières plastiques de recyclage

(30) Priorität: 27.03.1991 CH 937/91
(43) Veröffentlichungstag der Anmeldung: 30.09.1992
(73) Patentinhaber: Ciba Specialty Chemicals Holding Inc., 4057 Basel (CH)
(72) Erfinder: Pauquet, Jean-Roch, CH-4303 Kaiseraugst (CH); Sitek, Franciszek, Dr., CH-4106 Therwil (CH); Todesco, Roberto, Dr., CH-4123 Allschwil (CH)

(56) Entgegenhaltungen:
- EP-A- 0 336 606
- DATABASE WPIL Week 8944, Derwent Publications Ltd., London, GB; AN 89-321388
- INDUSTRIE ANZEIGER Bd. 99, Nr. 71, 1977, Seiten 1367 - 1369 M. RIEDEL 'Neue Stabilisatoren zur Verbesserung des Recycling'
- CHEMICAL ABSTRACTS, vol. 106, no. 2, 12. Januar 1987, Columbus, Ohio, US; abstract no. 6344u,
- CONF. INT. TRADE FAIR RECYCLING, REFUSE COLLECT. WASTE TREAT. "ELMIA-AVFALL 79" 1979, J NK PING, SWEDEN Seiten 657 - 667 F. MITTERHOFER 'Stabilization aspects for the recycling of scrap and waste'
- EUR. POLYM. J. Bd. 18, 1982, Seiten 1007 - 1010 C. SADRMOHAGHEGH ET AL. 'Effects of Reprocessing on Polymers - V'
- Polym.Plast.Technol.Eng., Band 24, 1985, S. 149-185.

## Beschreibung

Die Erfindung betrifft ein Verfahren zum Stabilisieren von recyclierten Kunststoffgemischen, wie sie aus Haushalts- und Handelsmüll gewonnen werden.

Die Recyclierung unserer Abfallstoffe ist ein Problem, das aus ökologischen Gründen zunehmende Bedeutung gewinnt. Die Rückführung von Papier, Textilien, Glas oder Metallen geschieht bereits in grossem Umfang, sei es durch getrennte Abgabe oder durch Sortierung des Mülls. Eine Wiederverwendung von Kunststoff-Abfällen ist prinzipiell möglich, soweit es sich um thermoplastische Kunststoffe handelt. Der in Haushalten und im Handel anfallende Kunststoff-Abfall, der im wesentlichen aus Verpackungsmaterial stammt, besteht fast ausschliesslich aus thermoplastischen Kunststoffen, vorwiegend aus Polyolefinen, Styrolpolymeren und Polyvinylchlorid.

Während die Sortierung der Kunststoffabfälle von den übrigen Abfällen technisch und wirtschaftlich möglich ist, ist eine Sortierung der einzelnen Kunststoff-Typen untereinander mit grossem Aufwand verbunden. Eine Wiederverwertung von Kunststoffabfällen aus dem Haushaltsmüll bedeutet also praktisch die Verwertung eines Gemisches verschiedener Typen von Kunststoffen. Dies bringt grosse technische Probleme mit sich, da die einzelnen Kunststofftypen untereinander nur begrenzt oder nicht mischbar sind. Wohl kann man verschiedene Typen thermoplastischer Kunststoffe durch Aufschmelzen und Formgebung verarbeiten, die dabei entstehenden Gemische (Polyblends) nicht mischbarer Kunststoffe sind jedoch mikroskopisch inhomogen, d.h. sie bestehen mikroskopisch aus verschiedenen festen Phasen. Dies bewirkt eine starke Verminderung der mechanischen Eigenschaften und solche Recyclate können nur für Zwecke verwendet werden, wo geringe Ansprüche an die Festigkeit gestellt werden, wie z.B. für Lärmschutzwälle oder als Füllstoffe.

Typische unverträgliche Kombinationen, die im Hausmüll vorkommen, sind z.B. Polyethylen und PVC oder Polyethylen und Polystyrol. Man hat zur Lösung dieses Problems den Zusatz von polymeren Verträglichkeitsverbesserem vorgeschlagen, auch "Solid Phase Dispersant" oder "Compatibilizer" genannt. So vermag z.B. der Zusatz von chloriertem Polyethylen Mischungen von Polyethylen und PVC zu homogenisieren. Der Zusatz von Styrol-Butadien-Copolymeren vermag Mischungen von Polyolefinen und Polystyrol zu homogenisieren. Als Ergebnis einer solchen Homogenisierung steigen die mechanischen Eigenschaften so stark an, dass solche Polyblends auch für wertvolle Verwendungen in Frage kommen. Eine Uebersicht über diese Entwicklungen geben C. Sadrmohaghegh, G. Scott und E. Setudeh in Polym. Plast. Technol. Eng. 24 (1985), 149-185.

Diese Autoren weisen auch darauf hin, dass die Recyclate neu stabilisiert werden müssen. Wohl waren den Kunststoffen ursprünglich Stabilisatoren gegen den thermisch-oxidativen und z.T. auch gegen den photooxidativen Abbau zugefügt worden. Diese Stabilisatoren sind aber im Laufe des Gebrauches der Kunststoffe und im Laufe der Lagerung der Abfälle teilweise verlorengegangen durch Auswanderung, Extraktion oder durch Abbau. Ausserdem bedarf ein recyclierter Kunststoff einer höheren Menge an Stabilisatoren als ein jungfräuliches Polymer, da sich bereits Angriffsstellen für den oxidativen Abbau gebildet haben.

Nun ist die Stabilisierung eines Kunststoff-Gemisches eine schwierige Aufgabe, da jede Type von Polymeren spezifische Anforderungen an die Stabilisatoren stellt. So werden z.B. für Vinylchlorid-Polymerisate ganz andere Stabilisatoren verwendet als für Polyolefine oder Styrolpolymerisate.

Man müsste also ein Gemisch verschiedener Stabilisatoren zur Stabilisierung eines Kunststoff-Gemisches zusetzen. Dies ist bei Vorliegen eines komplexen Kunststoff-Gemisches eine komplizierte Methode. Ausserdem können sich verschiedene Stabilisatoren gegenseitig ungünstig beeinflussen oder ein Stabilisator für die eine Komponente kann für die andere Komponente schädlich sein.

In der oben genannten Literatur sowie in Europ. Polym. J. 18 (1982), 1007 wird auch dieses Problem untersucht und die Autoren kommen zu dem Ergebnis, dass bestimmte Nickel-Komplexe, insbesondere Nickel-dialkyldithiocarbamate sowohl gegen thermischoxidative wie gegen photo-oxidative Schädigung von Polyblends aus Polyethylen/Polystyrol und Polyethylen/Polypropylen, die mit einem Verträglichkeitsverbesserer homogenisiert sind, die beste Stabilisierung bewirken. Ueber die Stabilisierung von Recyclaten, die auch PVC enthalten, ist darin nichts erwähnt.

Es wurde nunmehr gefunden, dass man solche Kunststoff-Gemische in einfacher und wirtschaftlicher Weise mit einem Gemisch aus zwei bekannten Stabilisatoren gegen thermisch-oxidativen Abbau stabilisieren kann.

Die Erfindung betrifft ein Verfahren zum Stabilisieren von recyclierten Gemischen verschiedener Typen thermoplastischer Kunststoffe, die aus Haushalts- und Handelsabfällen gewonnen werden, durch Zusatz von 0,05 bis 2 Gew.-% eines Gemisches aus a) mindestens einem sterisch gehinderten Phenol und b) mindestens einem Phosphorig- oder Phosphonigsäureester zu dem recyclierten Gemisch.

Bevorzugt ist ein Gewichtsverhältnis von a:b von 10:1 bis 1:10, wobei ein Gewichtsverhältnis von 5:1 bis 1:5 besonders bevorzugt ist.

Es handelt sich bei den zu stabilisierenden Kunststoff-Gemischen um Abfälle aus dem Müll von Haushalten und Handelsgeschäften (wie z.B. Supermärkten), der vorwiegend aus Verpackungsmaterial stammt Es kann sich dabei z.B. um Folien, Beutel, Flaschen und andere Behälter oder Schaumstoffe handeln. Es können auch Spielsachen oder andere Gebrauchsgegenstände enthalten sein. Nicht unter die Erfindung fallen Kunststoff-Abfälle, wie sie in der Kunststoff-erzeugenden oder Kunststoff-verarbeitenden Industrie anfallen und meist nur eine Sorte von Kunststoffen enthalten.

Insbesondere bezieht sich die Erfindung auf die Stabilisierung solcher recyclierter Kunststoff-Gemische, die 55-75 Gew.-% Polyolefine, 5-25 Gew.-% Polystyrol, 5-15 Gew.-% Polyvinylchorid und 0-10 Gew.-% sonstiger Thermoplaste enthalten.

Unter den Polyolefinen dominiert üblicherweise das Polyethylen, insbesonder Polyethylen niedriger Dichte. Unter Polystyrol sind auch Copolymerisate mit überwiegendem Anteil an Styrol zu verstehen und unter Polyvinylchlorid sind auch Copolymerisate mit überwiegendem Anteil an Vinylchlorid zu verstehen. An sonstigen Thermoplasten sind im Müll vor allem Polyethylenterephthalat enthalten, daneben Polyamide, Polycarbonat, Celluloseacetat und Polyvinylidenchlorid. In Kunststoff-Abfällen können auch kleine Mengen an Fremdstoffen enthalten sein, wie z.B. Papier, Pigmente, Klebstoffe, die oft schwierig zu entfernen sind. Auch kleinere Mengen Cellulose oder Faserstoffe stören die Recyclierung nicht.

Die Erfindung betrifft weiterhin ein Verfahren zum Stabilisieren von recyclierten Gemischen thermoplastischer Kunststoffe, die aus Haushalts- und Handelsabfällen gewonnen werden, durch Zusatz von 0,05 bis 2 Gew.-% eines Gemisches aus a) mindestens einem sterisch gehinderten Phenol und b) mindestens einem Phosphorig- oder Phosphonigsäureester, wobei das Gewichtsverhältnis a:b = 1:1 bis 1:4 ist. Bevorzugt ist das Gewichtsverhältnis a:b = 1:2 bis 1:4.

Bevorzugt setzt man dem Recyclat 0,1 bis 0,5 Gew.-% des Gemisches von a und b zu.

Die als Komponente a verwendeten sterisch gehinderten Phenole sind bekannte Stabilisatoren gegen die thermisch-oxidative Alterung von Kunststoffen, insbesondere von Polyolefinen. Vorzugsweise enthalten diese Verbindungen mindestens eine Gruppe der Formel 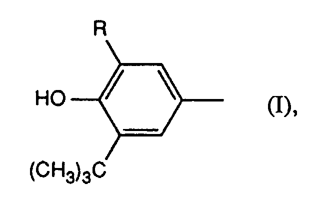 worin R Wasserstoff, Methyl oder tert.Butyl bedeutet.

Beispiele für solche sterisch gehinderten Phenole sind:
2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol, 2,6-Di-tert.butyl-4-methoxyphenol, 2,5-Di-tert.butyl-hydrochinon, 2,5-Di-tert.amyl-hydrochinon, 2,6-Di-phenyl-4-octa-decyloxyphenol, 2,2'-Thio-bis-(6-tert.butyl-4-methylphenol), 2,2'-Thio-bis-(4-octyl-phenol), 4,4'-Thio-bis-(6-tert.butyl-3-methylphenol), 4,4'-Thio-bis-(6-tert.butyl-2-methyl-phenol), 2,2'-Methylen-bis-(6-tert.butyl4-methylphenol), 2,2'-Methylen-bis-(6-tert.butyl-4-ethylphenol), 2,2'-Methylen-bis-[4-methyl-6-(a-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-do-decylmercaptobutan, Ethylenglycol-bis-[3,3-bis-(3'-tert.butyl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methylbenzyl)-6-tert.butyl-4-methyl-phenyl]-terephthalat, 1,3,5-Tris-(3,5-di-tert.butyl-4-hydroxybenzyl)-2,4,6-nimethylbenzol, Bis-(3,5-di-tert.butyl-4-hydroxybenzyl)sulfid, 3,5-Di-tert.butyl-4-hydroxybenzyl-mercaptoessigsäure-iso-octylester, Bis-(4-tert.butyl-3-hydrox-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-di-methylbenzyl)-isocyanurat, 3,5-Di-tert.butyl-4-hydroxybenzyl-phosphonsäure-dioctadecylester und das Ca-Salz des 3,5-Di-tert.butyl-4-hydroxybenzyl-phosphonsäure-mono-ethylester.

Besonders bevorzugt als Komponente a sind Verbindungen, die mindestens eine Gruppe der Formel 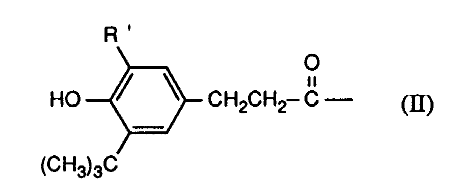 enthalten; worin R' Methyl oder tert.Butyl bedeutet.

Beispiele für solche gehinderten Phenole sind die Ester von β-(3,5-Di-tert.butyl-4-hydroxyphenyl)-propionsäure und der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-iso-cyanurat, N,N'-Bis-(hydroxyethyl)-oxalsäurediamid, sowie die Amide dieser Säuren, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin und N,N'-Bis-(3,5-di-tert.butyl-4-hydroxyphenylpropionyl)-hydrazin.

Besonders bevorzugt als Komponente a sind der Pentaerythrit-Ester und der Octadecylester der β-(3,5-Di-tert.butyl-4-hydroxyphenyl)-propionsäure.

Die als Komponente b verwendeten Phosphite und Phosphonite sind ebenfalls als Stabilisatoren für Kunststoffe bekannt. Sie werden insbesondere als Verarbeitungsstabilisatoren für Polyolefine verwendet

Es handelt sich hierbei vorwiegend um aromatische Phosphite und Phosphonite. Beispiele hierfür sind Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Distearylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butyl-4-methylphenoxy)-2,4,8,10-tetraoxa-3,9-diphosphaspiro[5.5]undecan, 3,9-Tris-(2,4,6-tris-tert.butylphenoxy)-2,4,8,10-tetraoxa-3,9-diphosphaspiro[5,5]undecan und 2,2'-Ethyliden-bis-(4,6-di-tert.butylphenyl)-fluorophosphit.

Besonders bevorzugt verwendet man als Komponente b Tetra-kis-(2,4-di-tert.butylphenyl)-4,4'-biphenylen-diphosphonit, Tris-(2,4-di-tert.butyl-phenyl)-phosphit oder Tris-(4-nonylphenyl)-phosphit.

Kombinationen von phenolischen Antioxidantien mit Phosphiten sind als Stabilisatoren für Polyolefine bekannt, siehe z.B. Gächter, Müller/Kunststoff-Additive, C. Hanser-Verlag 1983, Seite 1-78, insbesondere Seite 22-41. Dass sich solche Kombinationen auch für Gemische von Polyolefinen mit Styrol- und Vinylchlorid-Polymeren eignen, ist jedoch neu und überraschend.

Der Zusatz dieser Kombinationen zum Recyclat ermöglicht die thermoplastische Verarbeitung unter vermindertem Abbau und verlängert die Lebensdauer der aus dem Recyclat hergestellten Materialien. Dies gilt unabhängig davon, ob dem Recyclat ein Verträglichkeitsverbesserer zugesetzt wird oder nicht. Der Zusatz der Kombination von a und b hat jedoch besondere Bedeutung für Recyclate, denen ein Polymer oder Polymerengemisch zugesetzt wird, das die Verträglichkeit der einzelnen Kunststoffe untereinander erhöht, weil auch dieses Polymer einer Stabilisierung bedarf.

Diese Verträglichkeitsverbesserer können z.B. Copolymerisate, insbesondere Blockcopolymerisate, von Styrol mit Butadien und gegebenenfalls Acrylnitril sein. Sie können Copolymerisate von Ethylen und Propylen sein und gegebenenfalls eine dritte Monomerkomponente, z.B. Butadien, enthalten.

Auch chloriertes Polyethylen oder Ethylen-Vinylacetat-Copolymere eignen sich als Verträglichkeitsverbesserer, wobei es natürlich auf die jeweilige Zusammensetzung des Recyclates ankommt.

Diese polymeren Verträglichkeitsverbesserer werden im allgemeinen in Mengen von 3-20 Gew.-%, bezogen auf das Kunststoffgemisch, verwendet.

Die stabilisierende Wirkung des Gemisches von a und b, vor allem die Langzeitstabilität, kann synergistisch verstärkt werden durch den Zusatz von sogenannten Thiosynergisten. Es sind dies aliphatische Thioether, insbesondere Ester der Thiodipropionsäure. Beispiele hierfür sind der Lauryl-, Stearyl-, Myristyl- oder Tridecylester der Thiodipropionsäure oder Distearyldisulfid. Diese Thiosynergisten werden vorzugsweise in einer Menge von 0,1 bis 0,6 Gew.%, bezogen auf das Recyclat, verwendet

Wird von dem aus dem Recyclat hergestellten Gegenstand auch eine hohe Lichtstabilität verlangt, so empfiehlt sich der Zusatz eines oder mehrerer Lichtschutzmittel. Hierfür eignen sich vor allem Lichtschutzmittel aus der Reihe der Benzophenone, Benztriazole, Oxalanilide und der sterisch gehinderten Amine. Beispiele für solche Verbindungen sind:
2-Hydroxybenzophenone, wie z.B. das 4-Hydroxy-, 4-Methoxy-, 4-Octoxy-, 4-Decyloxy-,
2-(2'-Hydroxyphenyl)-benztriazole, wie z.B. das 5'-Methyl-, 3',5'-Di-tert.butyl-, 5'-tertButyl, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.
Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyl-oxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.
Sterisch gehinderte Amine,wie z.B. Bis-(2,2,6,6-tetramethylpiperidyl)-sebacat, Bis-(1,2,2,6,6-pentamethylpiperidyl)-sebacat, Bis-(1-octyloxy-2,2,6,6-tetramethyl-4-piperidyl)-sebacat, n-Butyl-3,5-di-tert.butyl-4-hydroxybenzyl-malonsäure-bis-(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-di-chlor-1,3,5-s-triazin oder 4-Morpholino-2,6-dichlor- 1,3,5-triazin,Tetrakis-(2,2,6,6-tetramethyl-4-piperidyl)-1,2,3,4-butantetraoat, Bis-(2,2,6,6-tetramethylpiperidyl)-succinat, N-(1,2,2,6,6-Pentamethyl-4-piperidyl)-α-dodecyl-succinimid, N-(2,2,6,6-Tetramethyl-4-piperidyl)-α-dodecyl-succinimid, 2,4,6-Tris[N-pentyl-2-(3,3,5,5-tetramethyl-2-oxopiperazino)-ethylamino]-1,3,5-triazin, 2,2,4,4-Tetramethyl-7-oxa-3,20-diaza-21-oxo-di-spiro[5,1,1 1,2]-heneicosan, 2,2,4,4-Tetramethyl-20-(2-dodecyloxycarbonyl-ethyl)-7-oxa-3,20-diaza-21-oxo-dispiro[5,1,11 ,2]-heneicosan, 8-Acetyl-3-dodecyl-1,3,8-triaza-7,7,9,9-tetramethyl-spiro[4,5]-decan-2,4-dion, 1,5,8,12-Tetrakis[2,4-bis(N-butyl-1,2,2,6,6-pentamethyl-4-piperidylamino)-1,3,5-triazin-6 -yl]-1,5,8,12-tetraazadodecan sowie 2,2,6,6-Tetramethyl-4-piperidinylgruppen enthaltende Polysiloxane.

Die Lichtschutzmittel werden vorzugsweise in einer Menge von 0,01 bis 2 Gew.-%, insbesondere 0,05 bis 0,5 Gew.%, bezogen auf das Kunststoff-Gemisch, zugesetzt. Bevorzugt verwendet man als Lichtschutzmittel eine Kombination eines Benztriazols mit einem sterisch gehinderten Amin.

Dem recyclierten Kunststoffgemisch können bei Bedarf weitere übliche Kunststoff-Zusätze zugegeben werden, z.B. Füllstoffe, Verstärkungsmittel, Pigmente, Weichmacher, Gleitmittel, Flammschutzmittel, Antistatica oder Treibmittel. Solche Zusätze hängen von der beabsichtigten Verwendung des Recyclates ab.

Die so stabilisierten Recyclate können für die verschiedensten Zwecke verwendet werden, z.B. für Rohre, Profile, Platten, Kabelisolationen, Sportgeräte, Gartenmöbel, Konstruktionsteile, Teile von Fahrzeugen und Maschinen und Behälter jeder Art.

Die folgenden Beispiele illustrieren das erfindungsgemässe Verfahren näher. Darin bedeuten Teile Gewichtsteile und Prozente Gewichts-prozente.

Beispiel 1: Eine Mischung von recyclierten Kunststoffen, bestehend aus ca. 72 % Polyolefinen (davon ca. 80 % Polyethylen), ca. 18 % Polystyrol, ca. 7 % Polyvinylchlorid und ca. 3 % sonstiger Kunststoffe, wird in einem Shredder zerkleinert. Nach Zusatz der in Tabelle 1 aufgeführten Stabilisatoren wird das Polymer in einem Brabender-Plastographen bei 200°C aufgeschmolzen und homogenisiert. Die Schmelze wird dann bei 200°C zu 2 mm dicken Platten verpresst.

Diese Platten werden in einem Umluftofen bei 110°C einer künstlichen Alterung unterworfen bis zur Versprödung des Materials. Tabelle 1 gibt die Zeit bis zur Versprödung als Gradmesser der Stabilisierung an.

Die folgenden Stabilisatoren werden verwendet:
AO-1 Pentaerythritester der β-(3,5-Di-tert.butyl-4-hydroxyphenyl)-propionsäure
P-1 Tris-(2,4-di-tert.butylphenyl)-phosphit

**Tabelle 1**

| Stabilisator | Tage bis Versprödung bei 110°C |
|---|---|
| Keiner | 18 |
| 0,05 % AO-1 + 0,1 % P-1 | 58 |
| 0.05 % AO-1 + 0,2 % P-1 | 55 |
| 0,05 % AO-1 + 0,2 % P-1 + 6 % Bennet® GR10^{*)} | 111 |

| | |
|---|---|
| ^{*)}Bennet® GR10 = Verträglichkeitsverbesserer auf Basis eines Ethylen-Propylen-Copolymerisates | |

Beispiel 2: Eine Mischung von recyclierten Kunststoffen, bestehend aus ca. 70 % Polyolefinen, ca. 20 % Polystyrol, ca. 7 % Polyvinylchlorid und ca. 3 % sonstiger Kunststoffe, wird in einem Shredder zerkleinert. Nach Zusatz der in Tabelle 2 aufgeführten Stabilisatoren wird das Polymer bei 190°C in einem Doppelschneckenextruder extrudiert. Von den so erhaltenen Profilen werden Platten von 1,5x10x0,5 cm ausgesägt.

Diese Platten werden in einem Umluftofen bei 110°C einer künstlichen Alterung unterworfen bis zur Versprödung des Materials. Tabelle 2 gibt die Zeit bis zur Versprödung als Gradmesser der Stabilisierung an.

Die folgenden Stabilisatoren werden verwendet:
AO-1 Pentaerythritester der β-(3,5-Di-tert.butyl-4-hydroxyphenyl)-propionsäure
P-1 Tris-(2,4-di-tert.butylphenyl)-phosphit
T-1 Distearyl-thiodipropionat
L-1 2-(2'-Hydroxy-3',5' -di-tert.butylphenyl)-5-chlor-benzotriazol
L-2 Bis-(2,2,6,6-tetramethyl-4-piperidyl)-sebacat

**Tabelle 2**

| Stabilisator | Tage bis Versprödung bei 110°C |
|---|---|
| Keiner | 43 |
| 0,03 % AO-1 + 0,06 % P-1 + 0,1 T-1 | 270 |
| 0,05 % AO-1 + 0,1 % P-1 | >270 |
| 0,05 % AO-1 + 0,1 % P-1 +0,3 % L-1 | >270 |
| 0,05 % AO-1 + 0,1 % P-1 +0,15 % L-1 + 0,3 % L-2 | >270 |
| 0,05 % AO-1 + 0,1 % P-1 + 0,3 % L-2 | >270 |

Beispiel 3: Eine Mischung von recyclierten Kunststoffen, bestehend aus ca. 70 % Polyolefinen, ca. 20 % Polystyrol, ca. 7 % Polyvinylchlorid und ca. 3 % sonstiger Kunststoffe, wird in einem Shredder zerkleinert. Nach Zusatz der in Tabelle 3 aufgeführten Stabilisatoren wird das Polymer bei 190°C in einem Doppelschneckenextruder extrudiert. Von den so erhaltenen Profilen werden Platten von 1,5x4x0,5 cm ausgesägt.

Diese Platten werden in einen Weather-Ometer gehängt (Schwarztafeltemperatur ca. 63°C, rel. Luftfeuchtigkeit ca. 60 %, Trockenperiode). Nach 6000 Stunden künstlicher Bewitterung wird die Schlagzähigkeit in einem Zwick-Schlagzähigkeitstester gemessen, hierfür werden Proben von 1,5x1,0x0,5 cm aus den Platten geschnitten. In Tabelle 3 ist die sich daraus berechnende Restschlagzähigkeit angegeben.

Die folgenden Stabilisatoren werden verwendet:
AO-1 Pentaerythritester der β-(3,5-Di-tert.butyl-4-hydroxyphenyl)-propionsäure
P-1 Tris-(2,4di-tert.butylphenyl)-phosphit
L-1 2-(2'-Hydroxy-3',5'-di-tert.butylphenyl)-5-chlor-benzotriazol
L-2 Bis-(2,2,6,6-tetramethyl-4-piperidyl)-sebacat

**Tabelle 3**

| Stabilisator | % Restschlagzähigkeit |
|---|---|
| Keiner | 42 |
| 0,05 % AO-1 + 0,1 % P-1 | 62 |
| 0,05 % AO-1 + 0,1 % P-1 +0,3 % L-1 | 71 |
| 0,05 % AO-1 + 0,1 % P-1 + 0,3 % L-2 | 67 |

## Patentansprüche

1. Verfahren zum Stabilisieren von recyclierten Gemischen verschiedener Typen thermoplastischer Kunststoffe, die aus Haushalts- und Handelsabfällen gewonnen werden, durch Zusatz von 0,05 bis 2 Gew.-% eines Gemisches aus a) mindestens einem sterisch gehinderten Phenol und b) mindestens einem Phosphorig- oder Phosphonigsäureesters zu dem recyclierten Gemisch.

2. Verfahren zum Stabilisieren von recyclierten Gemischen thermoplastischer Kunststoffe, die aus Haushalts- und Handelsabfällen gewonnen werden, durch Zusatz von 0,05 bis 2 Gew.-% eines Gemisches aus a) mindestens einem sterisch gehinderten Phenol und b) mindestens einem Phosphorig- oder Phosphonigsäureesters, wobei das Gewichts-Verhältnis a:b = 1:1 bis 1:4 ist.

3. Verfahren gemäss Anspruch 1 oder 2, dadurch gekennzeichnet, dass das Kunststoff-Gemisch zu 55-75 Gew.-% aus Polyolefinen, zu 5-25 % aus Polystyrol, zu 5-15 % aus Polyvinylchlorid und 0-10 % aus sonstigen thermoplastischen Kunststoffen besteht.

4. Verfahren gemäss Anspruch 1 oder 2, dadurch gekennzeichnet, dass man dem Kunststoff-Gemisch 0,1 bis 0,5 Gew.-% des Gemisches von a und b zusetzt.

5. Verfahren gemäss Anspruch 1 oder 2, dadurch gekennzeichnet, dass die Komponente a eine Verbindung ist, die mindestens eine Gruppe der Formel 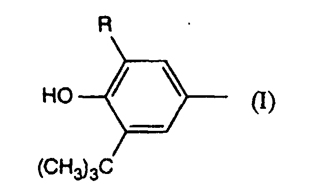 enthält, worin R Wasserstoff, Methyl oder tert.Butyl ist.

6. Verfahren gemäss Anspruch 1 oder 2, dadurch gekennzeichnet, dass die Komponente a eine Verbindung ist, die mindestens eine Gruppe der Formel 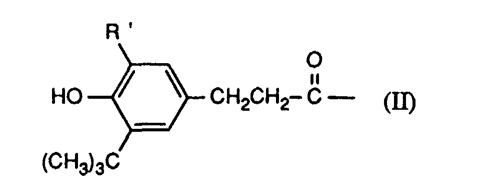 enthält, worin R' Methyl oder tert.Butyl bedeutet.

7. Verfahren gemäss Anspruch 1 oder 2, dadurch gekennzeichnet, dass man als Komponente a den Pentaerythritester oder den Octadecylester der β-(3,5-Di-tert.butyl-4-hydroxyphenyl)-propionsäure verwendet.

8. Verfahren gemäss Anspruch 1 oder 2, dadurch gekennzeichnet, dass man als Komponente b Tetrakis-(2,4-di-tert.butylphenyl)-4,4'-biphenylen-diphosphonit, Tris-(2,4-di-tert.butylphenyl)-phosphit oder Tris-(4-nonylphenyl)-phosphit verwendet.

9. Verfahren gemäss Anspruch 1 oder 2, dadurch gekennzeichnet, dass das Kunststoff-Gemisch zusätzlich ein Polymer oder Polymergemisch enthält, das die Verträglichkeit der einzelnen Kunststoffe untereinander erhöht.

10. Verfahren gemäss Anspruch 9, dadurch gekennzeichnet, dass der Verträglichkeitsverbesserer in einer Menge von 3-20 Gew.-%, bezogen auf das Kunststoff-Gemisch vorliegt.

11. Verfahren gemäss Anspruch 1 oder 2, dadurch gekennzeichnet, dass man dem recyclierten Gemisch zusätzlich einen Thiosynergisten aus der Reihe der Ester der Thiodipropionsäure zusetzt.

12. Verfahren gemäss Anspruch 11, dadurch gekennzeichnet, dass die Menge des Thiosynergisten 0,1 bis 0,6 Gew.%, bezogen auf das Recyclat, beträgt.

13. Verfahren gemäss Anspruch 1 oder 2, dadurch gekennzeichnet, dass man dem recyclierten Gemisch zusätzlich mindestens ein Lichtschutzmittel aus der Reihe der Benzophenone, Benztriazole, Oxalanilide oder sterisch gehinderten Amine zusetzt.

14. Verfahren gemäss Anspruch 13, dadurch gekennzeichnet, dass die Menge des oder der Lichtschutzmittel 0,01 bis 2 Gew.-%, bezogen auf das Kunststoff-Gemisch, beträgt.

15. Verfahren gemäss Anspruch 13, dadurch gekennzeichnet, dass man ein Lichtschutzmittel aus der Reihe der Benztriazole und ein Lichtschutzmittel aus der Reihe der sterisch gehinderten Amine zusetzt.

## Claims

1. A process for stabilising recycled mixtures of different types of thermoplastic polymers which are recovered from domestic and commercial waste, by adding from 0.05 to 2 % by weight of a) at least one sterically hindered phenol and b) at least one phosphite or phosphonite to the recycled mixture.

2. A process for stabilising recycled mixtures of thermoplastic polymers which are recovered from domestic and commercial waste, by adding from 0.05 to 2 % by weight of a) at least one sterically hindered phenol and b) at least one phosphite or phosphonite, where the weight ration a:b is from 1:1 to 1:4.

3. A process according to claim 1 or 2, wherein the mixed plastics comprise 55-75 % by weight of polyolefins, 5-25 % by weight of polystyrene, 5-15 % by weight of polyvinyl chloride and 0-10 % by weight of other thermoplastic polymers.

4. A process according to claim 1 or 2, wherein from 0.1 to 0.5 % by weight of the mixture of a and b is added to the mixed plastics.

5. A process according to claim 1 or 2, wherein component a is a compound which includes at least one group of the formula 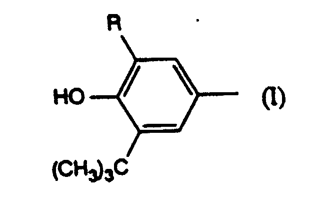 in which R is hydrogen, methyl or tert-butyl.

6. A process according to claim 1 or 2, wherein component a is a compound which includes at least one group of the formula 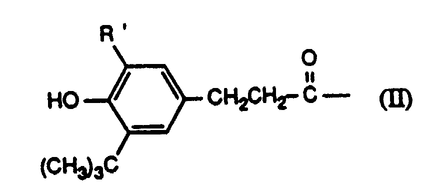 in which R' is methyl or tert-butyl.

7. A process according to claim 1 or 2, wherein component a is the pentaerythritol ester or the ocatdecyl ester of β-(3,5-di-tert-butyl-4-hydroxyphenyl)propionic acid.

8. A process according to claim 1 or 2, wherein component b is tetrakis(2,4-di-tert-butylphenyl)-4,4'-biphenylene diphosphonite, tris(2,4-di-tert-butylphenyl) phosphite or tris(4-nonylphenyl) phosphite.

9. A process according to claim 1 or 2, wherein the mixed plastics additionally comprise a polymer or polymer blend which enhances the mutual compatibility of the individual plastics.

10. A process according to claim 9, wherein the compatibiliser is used in an amount of 3-20 % by weight, based on the mixed plastics.

11. A process according to claim 1 or 2, wherein a thiosynergist from the series of the esters of thiodipropionic acid is added to the recycled mixture.

12. A process according to claim 11, wherein the amount of thiosynergist is from 0.1 to 0.6 % by weight, based on the recyclate.

13. A process according to claim 1 or 2, which comprises additionally adding to the recycled mixture at least one light stabiliser from the series of the benzophenones, benzotriazoles, oxalanilides or sterically hindered amines.

14. A process according to claim 13, wherein the amount of light stabiliser or stabilisers is from 0.01 to 2 % by weight, based on the mixed plastics.

15. A process according to claim 13, which comprises adding a light stabiliser from the series of the benzotriazoles and a light stabiliser from the series of the sterically hindered amines.

## Revendications

1. Procédé pour stabiliser des mélanges de matières thermoplastiques de recyclage de types différents, qui sont récupérés à partir de déchets ménagers et commerciaux, au moyen de l'addition au mélange de recyclage de 0,05 à 2% en poids d'un mélange constitué de a) au moins un phénol à empêchement stérique et b) d'au moins un ester d'acide phosphoreux ou phosphoneux.

2. Procédé pour stabiliser des mélanges de matières thermoplastiques de recyclage, qui sont récupérés à partir de déchets ménagers et commerciaux, au moyen de l'addition au mélange de recyclage de 0,05 à 2% en poids d'un mélange constitué de a) au moins un phénol à empêchement stérique et b) d'au moins un ester d'acide phosphoreux ou phosphoneux, dans lequel le rapport en poids a:b est = 1:1 jusqu'à 1:4.

3. Procédé selon la revendication 1 ou 2, caractérisé en ce que le mélange de matières plastiques est constitué de 55 - 75% en poids de polyoléfines, de 5 - 25% en poids de polystyrène, de 5 - 15% en poids de polychlorure de vinyle et de 0 - 10% en poids d'autres matières thermoplastiques.

4. Procédé selon la revendication 1 ou 2, caractérisé en ce qu'on ajoute au mélange de matières plastiques 0,1 à 0,5% en poids du mélange de a et de b.

5. Procédé selon la revendication 1 ou 2, caractérisé en ce le composant a est un composé, qui contient au moins un groupe de formule 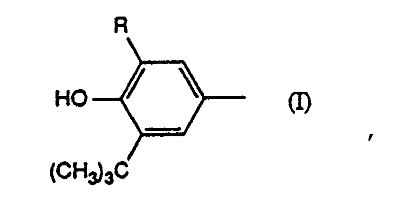 dans laquelle R est un atome d'hydrogène, un groupe méthyle ou tert.-butyle.

6. Procédé selon la revendication 1 ou 2, caractérisé en ce que le composant a est un composé, qui contient au moins un groupe de formule 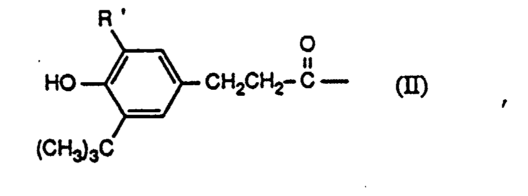 dans laquelle R' représente un groupe méthyle ou tert.-butyle.

7. Procédé selon la revendication 1 ou 2, caractérisé en ce qu'on utilise comme composant a l'ester de pentaérythritol ou l'ester d'octadécyle de l'acide β-(3,5-di-tert.-butyl-4-hydroxyphényl)-propionique.

8. Procédé selon la revendication 1 ou 2, caractérisé en ce qu'on utilise comme composant b le tétrakis-(2,4-di-tert.-butylphényl)-4,4'-biphénylèn-diphosphonite, le tris-(2,4-di-tert.-butylphényl)-phosphite ou le tris-(4-nonylphényl)-phosphite.

9. Procédé selon la revendication 1 ou 2, caractérisé en ce que le mélange de matières plastiques contient en supplément un polymère ou un mélange de polymères, qui augmente la compatibilité des matières plastiques entre elles.

10. Procédé selon la revendication 9, caractérisé en ce que l'agent d'amélioration de la compatibilité est présent en une quantité de 3 - 20% en poids, par rapport au mélange de matières plastiques.

11. Procédé selon la revendication 1 ou 2, caractérisé en ce qu'on ajoute au mélange de recyclage un agent thiosynergique additionnel choisi parmi les esters de l'acide thiodipropionique.

12. Procédé selon la revendication 11, caractérisé en ce que la quantité de l'agent de thiosynergie est de 0,1 à 0,6% en poids, par rapport au recyclat.

13. Procédé selon la revendication 1 ou 2, caractérisé en ce qu'on ajoute au mélange de recyclage au moins un agent de protection contre la lumière additionnel choisi parmi les benzophénones, les benzotriazoles, les oxalanilides ou les amines à empêchement stérique.

14. Procédé selon la revendication 13, caractérisé en ce que la quantité du ou des agents de protection contre la lumière est de 0,01 à 2% en poids, par rapport au mélange de matières plastiques.

15. Procédé selon la revendication 13, caractérisé en ce qu'on ajoute un agent de protection contre la lumière choisi parmi les benzotriazoles et un agent de protection contre la lumière choisi parmi les amines à empêchement stérique.
